# EUROPEAN PATENT SPECIFICATION

(11) **EP 0 838 741 B1**
(45) Date of publication and mention of the grant of the patent: **23.08.2000**
(21) Application number: 97117190.5
(22) Date of filing: 03.10.1997
(51) Int. Cl.: G05B 19/05

(54) **Control device for a lubrication system**
Steuerungsgerät für ein Schmiersystem
Dispositif de contrôle pour un système de lubrification

(30) Priority: 24.10.1996 IT MI962205
(43) Date of publication of application: 29.04.1998
(73) Proprietor: DROPSA S.P.A., 20123 Milano (IT)
(72) Inventor: Divisi, Walter, Egham, Surrey TW20 0HJ (GB)
(74) Representative: Luksch, Giorgio, Dr.-Ing.

(56) References cited:
- US-A- 4 445 168
- US-A- 5 344 044

## Description

This invention relates to a control device for a lubrication system in accordance with the introduction to the main claim.

In particular, the control device of the present invention is arranged to control the system pumping unit or units and to monitor the fluid flow within the system. As is well known to the expert of the art, the pumping unit can comprise pumps controlled by means of a constant electrical signal (for example electric pumps) or pumps controlled by means of pulse signals (for example single-acting pneumatic pumps). The working and rest cycle of the system pumps is controlled, according to the type of pump, by a timer or a pulse counter. The fluid flow within the system can be monitored, for example, via a pressure switch or the like provided in the main line of a valve arrangement, or by a switch provided in a progressive distributor.

Known control devices have a control unit comprising selection and display means which enable a particular desired operating configuration for the pumping members to be set and the lubricant fluid flow within the system to be monitored. For example, the following can be programmed via the selection and display means: type of pump and/or sensors used, minutes and seconds of a pump working cycle, hours and minutes of the rest cycle, number of cycles to be effected, and alarm values for certain characteristic parameters of the fluid, such as pressure or fluid flow rate.

Known systems generally comprise a control device at each system pumping unit. A system therefore often comprises a plurality of mutually independent control devices.

Moreover, the same particular operating configuration has to be set for a plurality of system control devices. Configuring the various system control devices is a relatively lengthy and complicated operation, requiring the use of attentive and expert personnel who have to directly visit those points of the system in which the control devices are positioned.

In selecting the configuration of the control devices it can also happen that by error or distraction one or more wrong values are selected, especially if one and the same configuration has to be set for a large number of system devices.

The problem is even more acute when the producer of the systems has to configure a plurality of systems for example in the same identical manner. If for example he has to configure 50 systems (with 50 control devices) he has to manually perform the same configuration operation for each control device, ie 50 times.

An object of the present invention is to provide a control device for a lubricant fluid distribution system which simplifies and accelerates the operations involved in selecting a particular system operating configuration, in particular when the same configuration has to be repeated for a plurality of control devices.

US-5,344,044 A shows an injection system for blending an additive into a main fluid flow stream at a controlled rate. This unrelated art comprises a control unit for its own control. The control unit comprises a microcontroller to control various system functions such as opening and closing of valves, and memorizing means for memorizing a desired operating configuration. The control unit may be remotely controlled by a hand held remote transmitter and communication therebetween is based on electromagnetic energy, e.g. infrared. Based on the information received the control unit invokes a control program.

This and further objects which will be apparent to an expert of the art are attained by a device in accordance with the characterising part of the main claim.

The present invention will be more apparent from the accompanying drawing, which is provided by way of non-limiting example and on which:
Figure 1 is a schematic view of a control panel of a control unit for a device according to the invention;
Figure 2 is a block diagram showing the components of a control unit for a device according to the invention;
Figure 3 is a block diagram showing the components of a selection member of a device according to the invention;
Figure 4 is a schematic view of an electronic circuit of the control unit of Figure 2.

With reference to said figures, a control device according to the invention is formed from two mutually separate distinct components, namely a control unit 1 to be positioned within the system at the pump to be controlled and at the relative fluid monitoring members, and a selection member 2 by means of which a working configuration selected by the user can be remotely fed.

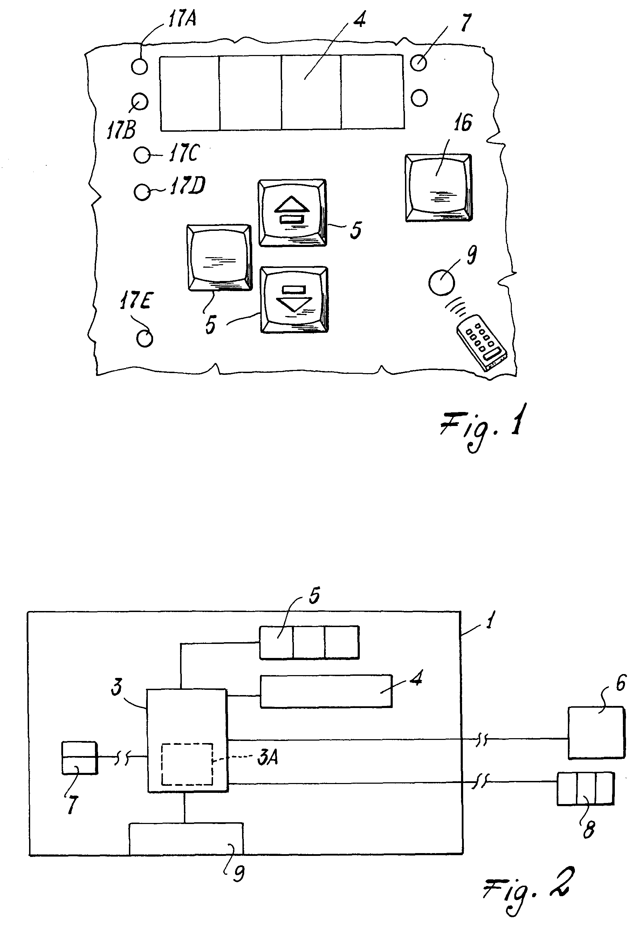

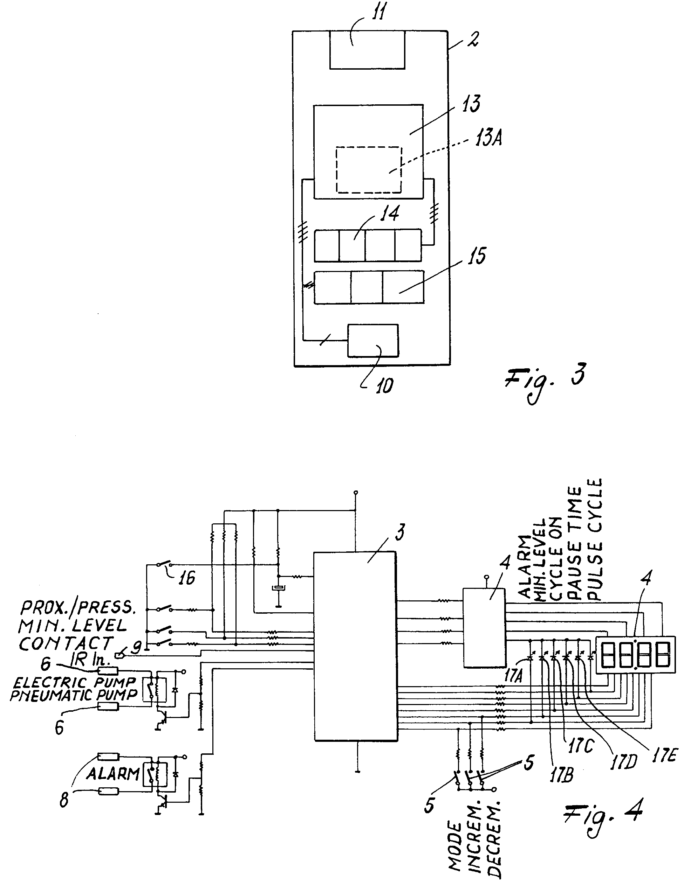

As shown in Figures 2 and 4 the control unit 1 comprises a central processing member 3, preferably of microprocessor type, comprising a memory 3A, and connected to a display member 4 and to a keypad 5 for selecting a desired configuration, to an alarm member (for example an LED), to a pump 6 to be controlled, and to one or more sensors 8 arranged to measure, along a line of the system, determined characteristics of the fluid, such as a minimum fluid level, the fluid flow rate and/or its pressure.

Figure 1 illustrates the control panel of the unit 1, showing the keys 5 and the display 4 for selecting the desired configuration, a key 16 for zeroing or resetting the memorized configuration, and a series of further display lights or LEDs 17A-E, indicating respectively the active or rest state of the pump controlled by the device (17A, B), working cycle control (17C), pulse counting (17D), and the device "on" or "off" state (17E).

As a unit of the aforedescribed type has been known for some time (see for example that marketed by the U.K. company DROPSA), this unit will not be described in detail. To operate the known units of the aforedescribed type, after pressing a reset key 16, the keypad 5 and display 4 are used to select the component to be "configured", for example an electric pump; then again using the keypad 5 the pump working and rest times and switch-on times are set. The limiting values for the controlled fluid parameters within the system section controlled by the device are then set. The selected configuration is memorized in the memory 3A. The handling of the selection and memorizing operations is preferably done by a conventional program, also for example memorized in the memory 3A, and executted by the central processing member 3.

Once configured and connected to the pump 6 and to the sensors 8, the device can be activated. A supervising program, also for example memorized in the memory 3A and executed by the central processing member 3, activates the pump within the selected time intervals and monitors the fluid parameters selected, to activate the alarm 7 when these parameters are outside those set according to the invention. To simplify and accelerate the operations involved in configuring the control unit 1 the particular configuration to be memorized can advantageously be selected not only via the keypad 5 provided on the control unit itself, but also by the selection member 2, separate and distinct from the control unit 1, and then fed to this latter for example by infrared rays or radio waves.

For this purpose, in addition to the aforedescribed conventional components, a control unit according to the invention comprises a receiver member 9, for example of the infrared receiving type, connected to the central processing unit 3. This latter, by virtue of a suitable program (of conventional type to the expert of the art and therefore not described hereinafter), enables the received configuration to be stored in the memory 3A, this being done on activating the control unit as described in detail hereinafter.

The selection member 2 is substantially in the form of a usual remote control, and comprises a processing member 13, preferably of microprocessor type, comprising a memory 13A. The processor member 13 is connected to a display member 14 and keypad 15 for selecting a desired working configuration, to a key 10 for feeding the selected configuration to the control unit 1, and to a member 11 for remotely transmitting the selected configuration to the unit 1.

The processing member 13, the memory 13A, the display 14 and the keypad 15 can, for example, be of the same type as that provided in the control unit 1. Consequently the operations to be carried out for selecting a particular working configuration and the operating logic are substantially similar to those already described for the unit 1.

When a particular configuration has been selected and memorized in the selection member 2, this configuration can be fed to the control unit 1.

To achieve this it is necessary merely to approach the control unit 1, point the selection member 2 towards the receiver 9 of the unit 1 and press the send key 10. In this respect, on pressing the send key 10 the processing member 13 feeds the previously memorized configuration to the transmission member 11, the transmission member then transmitting a signal or a series of signals relative to this configuration to the receiver member 9 of the control unit 1. This latter on receiving the configuration memorizes it in the memory 3A.

The members 11, 9 for the remote transmission and reception of the signals relative to a particular configuration can be of any conventional known type suitable for the purpose, for example of infrared or radio wave type.

By virtue of the selection member 2, the operations required for selecting a preferred configuration are much simplified; in this respect, the configuration can be initially memorized in the member itself without this having to be sited in proximity to the system, then later the selected configuration can be fed to all units requiring it, even by non-expert personnel.

In this manner all the operations required for "configuring" the control units are considerably simplified, with considerable reduction in the the time required for the configuration. The possibility of wrongly configuring the control units is also reduced.

Finally it should be noted that the aforedescribed embodiment is provided by way of example only, and that numerous modifications are possible all falling within the same inventive concept. For example, in as simplified version of the device, the control unit 1 could be without the selection keypad 5 and display 4. In this case the preferred configuration can only be selected via the selection member 2.

In a further possible modification the selection member could be formed in such a manner as to memorize more than one preferred configuration. In this case the selection member 2 would have to comprise more than one send key 10, which when pressed would feed one or other of the memorized configurations to the control unit 1.

## Claims

1. A control device for a lubrication system, of the type comprising a control unit (1) associated with said system, and having first memorizing means (3A) for memorizing a desired operating configuration of at least a part of the system, and means (3) for controlling said part of the system on the basis of that configuration, characterised by comprising a selection member (2) for selecting said desired configuration through selection means (13, 14, 15), said selection member (2) being separate and distinct from said control unit (1) and comprising second memorizing means (13A) for memorizing the selected configuration, and transmission means (11) for remotely transmitting to the control unit (1) the information relative to said selected configuration, the control unit (1) comprising reception means (9) for receiving said information and for memorizing it in said first memorizing means (3A).

2. A device as claimed in claim 1, characterised in that the transmission means (11) and reception means (9) are of infrared type.

3. A device as claimed in claim 1, characterised in that the transmission means (11) and reception means (9) are of radio wave type.

4. A device as claimed in claim 1, characterised in that the control unit (1) has its own means (3, 4, 5) for selecting a desired configuration.

5. A device as claimed in claim 1, characterised in that the selection means (13, 14, 15) and the second memorizing means (13A) of the selection member (2) enable a plurality of desired configurations to be selected, key means (10) being provided in said selection member (2) to feed to the control unit (1) one or other of said configurations.

6. A device as claimed in the preceding claims, characterised in that the selection means (13, 14, 15) of the selection member (2) comprise a microprocessor (13), a keypad (15) and a display (14).

7. A device as claimed in the preceding claims, characterised in that the its own means (3, 4, 5) of the control unit (1) comprise a microprocessor (3), a keypad (5) and a display (14).

## Patentansprüche

1. Steuervorrichtung für ein Schmierungs-System von dem Typ, das eine Steuereinheit (1) aufweist, die mit dem System in Beziehung steht und eine erste Speichereinrichtung (3A) zum Speichern einer gewünschten Betriebskonfiguration von zumindest einem Teil des Systems und eine Einrichtung (3) enthält, um diesen Teil des Systems auf der Basis dieser Konfiguration zu steuern, dadurch gekennzeichnet, daß ein Auswahlbauteil (2) zum Auswählen der gewünschten Konfiguration mittels Auswahleinrichtungen (13, 14, 15) vorgesehen ist, wobei das Auswahlbauteil (2) von der Steuereinheit (1) getrennt und verschieden ist sowie eine zweite Speichereinrichtung (13A), um die ausgewählte Konfiguration zu speichern, und eine Übertragungseinrichtung (11) enthält, um der Steuereinheit (1) die Informationen bezüglich der ausgewählten Konfiguration aus der Ferne zu übermitteln, wobei die Steuereinheit (1) eine Empfangseinrichtung (9) zum Empfangen der Informationen und zum Speichern davon in der ersten Speichereinrichtung (3A) aufweist.

2. Vorrichtung nach Anspruch 1, dadurch gekennzeichnet, daß die Übertragungseinrichtung (11) und die Empfangseinrichtung (9) vom Infrarot-Typ sind.

3. Vorrichtung nach Anspruch 1, dadurch gekennzeichnet, daß die Übertragungseinrichtung (11) und die Empfangseinrichtung (9) vom Radiowellen-Typ sind.

4. Vorrichtung nach Anspruch 1, dadurch gekennzeichnet, daß die Steuereinheit (1) ihre eigenen Einrichtungen (3, 4, 5) zum Auswählen einer gewünschten Konfiguration hat.

5. Vorrichtung nach Anspruch 1, dadurch gekennzeichnet, daß die Auswahleinrichtungen (13, 14, 15) und die zweite Speichereinrichtung (13A) des Auswahlbauteils (2) eine Vielzahl von gewünschten, auszuwählenden Konfigurationen ermöglichen, wobei in dem Auswahlbauteil (2) eine Tasteneinrichtung (10) vorgesehen ist, um der Steuereinheit (1) eine oder eine andere dieser Konfigurationen zuzuführen.

6. Vorrichtung nach einem der vorhergehenden Ansprüche, dadurch gekennzeichnet, daß die Auswahleinrichtungen (13, 14, 15) des Auswahlbauteils (2) einen Mikroprozessor (13), eine Tastatur (15) und eine Anzeige (14) enthalten.

7. Vorrichtung nach einem der vorhergehenden Ansprüche, dadurch gekennzeichnet, daß die eigenen Einrichtungen (3, 4, 5) der Steuereinheit (1) einen Mikroprozessor (3), eine Tastatur (5) und eine Anzeige (4) enthalten.

## Revendications

1. Dispositif de contrôle pour système de lubrification, du type comprenant une unité de commande (1) associée audit système, et comportant des premiers moyens de mémorisation (3A) pour mémoriser une configuration d'exploitation souhaitée d'au moins une partie du système, et des moyens (3) pour commander ladite partie du système sur la base de ladite configuration, caractérisé en ce qu'il comprend un élément de sélection (2) pour sélectionner ladite configuration souhaitée au moyen de moyens de sélection (13, 14, 15), ledit élément de sélection (2) étant indépendant et distinct de ladite unité de commande (1) et comprenant des seconds moyens de mémorisation (13A) pour mémoriser la configuration sélectionnée, et des moyens de transmission (11) pour transmettre à distance à l'unité de commande (1) les informations relatives à ladite configuration sélectionnée, l'unité de commande (1) comprenant des moyens de réception (9) pour recevoir lesdites informations et pour les mémoriser dans lesdits premiers moyens de mémorisation (3A).

2. Dispositif selon la revendication 1, caractérisé en ce que les moyens de transmission (11) et les moyens de réception (9) sont de type à infrarouge.

3. Dispositif selon la revendication 1, caractérisé en ce que les moyens de transmission (11) et les moyens de réception (9) sont de type à ondes hertziennes.

4. Dispositif selon la revendication 1, caractérisé en ce que l'unité de commande (1) possède ses propres moyens (3, 4, 5) pour sélectionner une configuration souhaitée.

5. Dispositif selon la revendication 1, caractérisé en ce que les moyens de sélection (13, 14, 15) et les seconds moyens de mémorisation (13A) de l'élément de sélection (2) permettent de sélectionner une pluralité de configurations souhaitées, des moyens à touches (10) étant prévus dans ledit élément de sélection (2) pour envoyer à l'unité de commande (1) l'une ou l'autre desdites configurations.

6. Dispositif selon les revendications précédentes, caractérisé en ce que les moyens de sélection (13, 14, 15) de l'élément de sélection (2) comprennent un microprocesseur (13), un clavier (15) et un affichage (14).

7. Dispositif selon l'une des revendications précédentes, caractérisé en ce que les moyens (3, 4, 5) propres à l'unité de commande (1) comprennent un microprocesseur (3), un clavier (5) et un affichage (14) .
